# EUROPEAN PATENT APPLICATION

(11) **EP 2 626 700 A2**
(43) Date of publication of application: **14.08.2013**
(21) Application number: 11830940.0
(22) Date of filing: 07.10.2011
(51) Int. Cl.: G01N 33/48, G01N 35/00, G01N 27/00

(54) **BIOSENSOR WITH THREE-DIMENSIONAL STRUCTURE AND MANUFACTURING METHOD THEREOF**

(30) Priority: 07.10.2010 KR 20100097890
(71) Applicant: Ceragem Medisys Inc., Cheonan-si, Chungcheongnam-do 331-833 (KR)
(72) Inventor: LEE, Jin Woo, Cheonan-si Chungcheongnam-do 331-833 (KR); CHOI, Jae Kyu, Cheonan-si Chungcheongnam-do 331-833 (KR); KIM, Tae Hun, Cheonan-si Chungcheongnam-do 331-833 (KR)
(74) Representative: Hössle Patentanwälte Partnerschaft
(86) International application number: PCT/KR2011/007433
(87) International publication number: WO 2012/047055

(57) **Abstract**

The present invention relates to a biosensor which is formed with a three-dimensional structure using 3D molded interconnect device (MID) technology and a manufacturing method thereof. The present invention provides a biosensor in which reactive electrodes and signal transfer parts are formed in a three-dimensional structure on a surface of a polymer using the 3D MID technology, and a manufacturing method thereof.

## Description

### Technical Field

The present invention relates to a biosensor having a three-dimensional structure formed by a 3D MID (molded interconnect device) technology and a manufacturing method thereof, and, more particularly, to a biosensor in which reaction electrodes and signal transfer parts are sterically formed on the surface of a polymer substrate using a 3D MID technology, and a manufacturing method thereof.

### Background Art

A biosensor is referred to as a means for examining the properties of materials using living thing's functions, and must have excellent sensitivity and reaction specificity because it is used as a device for detecting biomaterials. As analysis methods using a biosensor, there are enzymoanalytic methods and immunoanalytic methods. Biosensors are classified into optical biosensors and electrochemical biosensors according to methods of quantitatively analyzing a target material in a biological sample.

A biosensor must be inserted into a measuring apparatus in order to confirm the values measured by the biosensor. When a biosensor is inserted into a measuring apparatus, the measuring apparatus electrochemically analyzes the concentration and the like of a target material.

When a sample (for example, blood or the like) is dropped onto a biosensor, the biosensor converts the results of an occurring electrochemical reaction into electrical signals, and these electrical signals are transferred to a measuring apparatus connected with the biosensor. For this purpose, a biosensor must be provided with two or more reaction electrodes formed on a substrate, and must be provided with a signal transfer part (for example, a conducting wire, a lead wire, a conductive trace). Of course, a biosensor needs a reagent that causes an oxidation-reduction reaction together with a target material, a sample inlet for introducing a sample, a spacer for sucking a sample by inducing a capillary phenomenon, a cover and an air outlet.

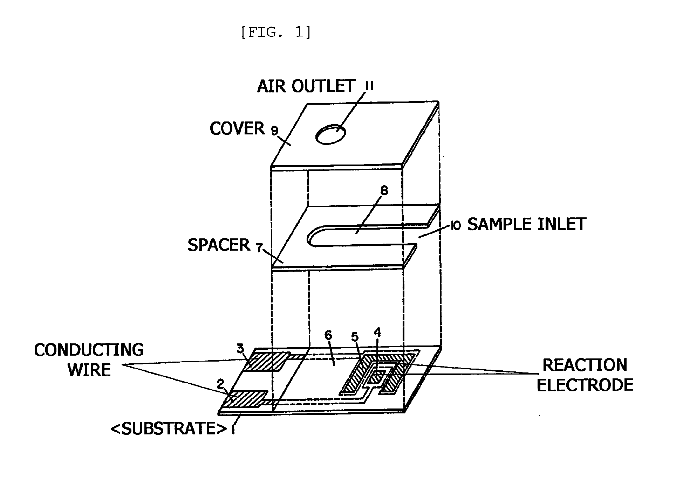

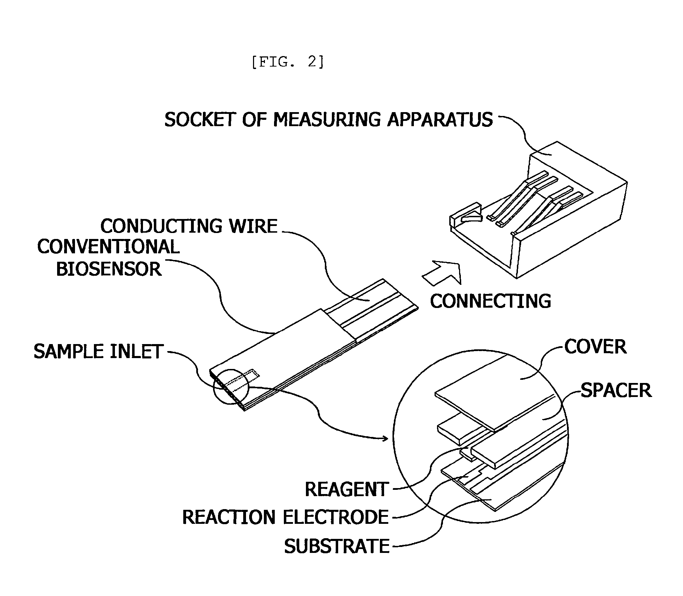

The process complexity, manufacturing cost, performance and the like of a biosensor depend on methods of manufacturing a biosensor by forming reaction electrodes and signal transfer parts on a substrate using industrial technologies. A conventional method of manufacturing a biosensor will be described with reference to FIGS. 1 and 2. FIGS. 1 and 2 are perspective views showing,conventional biosensors.

As shown in FIGS. 1 and 2, a conventional biosensor is configured such that reaction electrodes and conducting wires are integrally patterned on a substrate, a reagent is applied on each of the reaction electrodes, and a spacer and a cover are sequentially stacked on the substrate. The conducting wires of the above-configured conventional biosensor are connected to (inserted into, brought into contact with) a socket of a measuring apparatus to measure a blood sugar level.

Conventionally, as methods of forming reaction electrodes and conducting wires on a substrate, there are used a method of forming conductive electrodes by sputtering using a shadow mask, a method of forming electrodes using general sputtering, a method of forming electrodes using general photolithography or laser, and a method of forming an electrode pattern using screen printing, electroless plating, electroplating or the like.

Particularly, in a conventional biosensor, a substrate is made in the form of a thin film. When such a conventional electrode pattern forming technology is used, reaction electrodes and conducting wires can be formed in the same plane, that is, in one plane.

That is, conventional technologies are problematic in that only planar film-type biosensors (two-dimensional biosensors) can be manufactured, and in that reaction electrodes and conductive wires cannot be formed on different sides of a substrate.

Further, conventional technologies are problematic in that reaction electrodes and conducting wires cannot be sterically formed, and in that biosensors having various three-dimensional structures cannot be manufactured.

Further, conventional technologies are problematic in that various connecting means and user conveniences cannot be provided because all conducting wires connected with a measuring apparatus have a planar structure.

Therefore, it is urgently required to develop three-dimensional biosensors which can be formed into three-dimensional structures without limitation, which have various three-dimensional structures, which can be connected with a measuring apparatus in various manners and which can provide various user conveniences, and manufacturing methods thereof.

### Disclosure

### Technical Problem

Accordingly, the present invention has been devised to solve the above-mentioned problems, and an object of the present invention is to provide a biosensor in which reaction electrodes and signal transfer parts are sterically formed on the surface of a polymer substrate using 3D MID technology, and a manufacturing method thereof.

However, another object of the present invention is not limited to the above-mentioned object, and other objects and advantages of the present invention will be clearly understood from the following descriptions by those skilled in the art. Further, it will be easily understood that objects and advantages of the present invention can be realized by means disclosed in the accompanying claims and combinations thereof.

### Technical Solution

In order to accomplish the above object, an aspect of the present invention provides a biosensor in which reaction electrodes and signal transfer parts are sterically formed on the surface of a polymer substrate using a 3D MID (molded interconnect device) technology, and a manufacturing method thereof.

The biosensor may be manufactured by at least one 3D MID technology selected from laser direct structuring, 2-shot injection molding, flex foil film-insert overmolding, metal spraying technique, primer technology (metal printing), and hot stamping.

Further, the reaction electrodes and the signal transfer parts may be respectively formed on different sides of the polymer substrate.

Further, the reaction electrodes and the signal transfer parts may be formed such that they are electrically connected with each other using the 3D MID technology.

Further, the polymer substrate may have various steric shapes having predetermined thickness.

Further, the polymer substrate may be a plastic substrate.

Further the biosensor may further include: a reagent; and at least one of a spacer or cover.

Further, the spacer or cover may be made of an insulation material such as an insulation film, an insulation plastic or the like.

Further, the spacer or cover may be integrated with the polymer substrate or may be a part of the polymer substrate.

### Advantageous Effects

As described above, the biosensor of the present invention is effective in that it can be formed into three-dimensional structures without limitation, have various three-dimensional structures, be connected with a measuring apparatus in various manners, and provide various user conveniences.

Further, the present invention is effective in that the process of manufacturing a biosensor can be simplified, the manufacturing cost of a biosensor can be reduced, and the performance of a biosensor can be improved.

Further, the present invention is effective in that the pattern of a polymer substrate, a reaction electrode, and a signal transfer part can be amended by reprogramming, and thus biosensors having various three-dimensional structures can be manufactured by one biosensor manufacturing machine.

### Description of Drawings

FIGS. 1 and 2 are perspective views showing conventional biosensors.
FIGS. 3 to 22 are perspective views showing three-dimensional biosensors and manufacturing methods thereof according to various embodiments of the present invention.
FIG. 23 is a schematic view showing a process of forming reaction electrodes and transfer signal parts on the surface of a plastic substrate using LDS (laser direct structuring).

### Best Mode

The above and other objects, features and advantages of the present invention will be more clearly understood from the following detailed description taken in conjunction with the accompanying drawings, and thus technical ideas of the present invention will be easily carried out by those skilled in the art. Further, in the description of the present invention, when it is determined that the detailed description of the related art would obscure the gist of the present invention, the description thereof will be omitted. Hereinafter, preferred embodiments of the present invention will be described in detail with reference to the attached drawings.

The present invention provides a steric biosensor and a manufacturing method thereof, that is, a biosensor, in which a reaction electrode and a signal transfer part are sterically formed on the surface of a polymer substrate using a 3D MID (molded interconnect device) technology, and a manufacturing method thereof. The steric biosensor disclosed in the present invention is defined by "3D biosensor (three-dimensional biosensor)".

In the present invention, in order to manufacture a 3D biosensor, 3D MID technologies, such as LDS (laser direct structuring process), 2K (2-shot injection molding), flex foil film-insert overmolding, metal spraying technique, primer technology (metal printing), hot stamping, and combinations thereof are used.

In the present invention, in order to manufacture a 3D biosensor, various steric polymer substrates having predetermined thickness are used. That is, in the present invention, a polymer substrate is formed into a body (frame or support material) of a 3D biosensor, and reaction electrodes and signal transfer parts are formed on the surface of this polymer substrate.

In the present invention, a polymer substrate may have various complicated polyhedral shapes, such as a thin film-type plane, a plane having predetermined thickness, a polygon

(a square, a rectangle, a trapezoid, a lozenge or a triangle), an ellipse, a semicylinder, a cylinder, a cube having a curve, a bend or a notch, and the like. Of course, the size, weight and the like of the polymer substrate of the present invention are not limited. Examples of such polymer substrates may include synthetic resin, synthetic fiber, synthetic rubber and the like. The polymer substrate of the present invention may be formed by injection molding, extrusion molding, air blow molding, foam molding or the like. In the present invention, a plastic substrate (a thermoplastic plastic substrate or a thermosetting plastic substrate) is used as an example of a polymer substrate.

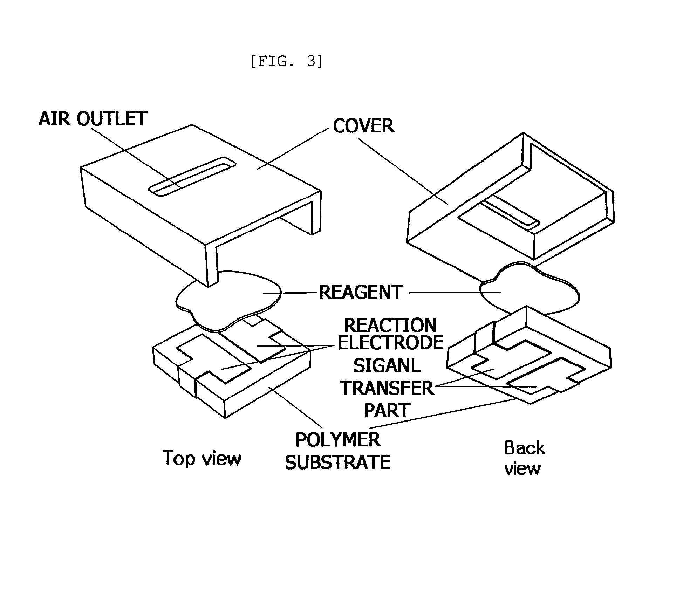

In the present invention, the structure of a socket of a measuring apparatus connected with a 3D biosensor, that is, a measuring apparatus connected with a signal transfer part of a 3D bionsensor, is not described in detail. However, as is generally known, the measuring apparatus uses a socket commonly known in the field of biosensor or uses a socket matched with a signal transfer part shown in FIGS. 3 to 22, so the structure of a socket of the measuring apparatus of the present invention will be easily understood by those skilled in the art.

Moreover, in order to enable an understanding of the present invention, a socket is used as an example of a node (connecting node) for connecting a 3D biosensor with a measuring apparatus. It will be understood that this connecting node includes all means for connecting (inserting, contacting) electric/electronic appliances. Examples of the connecting nodes may include sockets, connectors, terminals, electric connectors, wiring connecting media, plugs, and the like.

In order to enable an understanding of the present invention, a 3D biosensor for measuring blood sugar in blood using electrochemical amperometry will be described as an example. In this case, it will be understood by those skilled in the art that the technologies disclosed in the present invention can be applied in all biosensing technical fields including blood sugar measurement.

Hereinafter, the 3D biosensor of the present invention will be described with reference to the accompanying drawings based on the difference between this 3D biosensor and a conventional thin film type planar biosensor (two-dimensional biosensor) and the characteristics of this 3D biosensor. Detailed description of commonly-functionalized constituents of the 3D biosensor will be omitted, if possible. The constituents of the present invention may be exaggeratedly shown in FIGS. 3 to 22 in order to show the characteristics of the present invention.

Further, FIGS. 3 to 22 show various 3D biosensors according to embodiments of the present invention. Various 3D biosensors can be embodied by combining the technical constitution shown in the drawings with the technical constitution described in the specification of the present invention.

The constituents of the 3D biosensor of the present invention are described as follows.

The space formed by a polymer substrate, a reaction electrode, a reagent and a cover (or a spacer and a cover) i referred to as "a reaction chamber". The electrochemical reaction of a target material (for example, blood sugar in a sample (blood)) is conducted in this reaction chamber.

A reaction electrode is an electrode for generating an electrical signal corresponding to the chemical reaction caused by a reagent. That is, the reaction electrode generates an analog electrical signal corresponding to the oxidation-reduction reaction caused by a reagent and a target material. One of two reaction electrodes may be a working electrode, and the other thereof may be a reference electrode. In the electrochemical measurement, at least two reaction electrodes are needed, and the number of reaction electrodes may be various, such as three, five, eight, etc.

A signal transfer part is a means for transferring a voltage applied between reaction electrodes and a measuring apparatus and an analog electrical signal (current, voltage or the like) generated by an electrochemical reaction. Such a signal transfer part is called "a conducting wire, a lead wire or a conductive trace."

Particularly, in the 3D biosensor of the present invention, reaction electrodes and signal transfer parts are sterically formed on the surface of a polymer substrate using 3D MID technology. That is, reaction electrodes and signal transfer parts are integrally patterned using 3D MID technology to electrically connect them with each other. Such reaction electrodes and signal transfer parts may be made of an electroconductive material, such as carbon, graphite, platinum-carbon, silver, gold, palladium, platinum or the like.

The reaction electrodes and signal transfer parts may be respectively formed on different sides of a polymer substrate. That is, the reaction electrodes may be formed on the upper side of a polymer substrate, and the signal transfer parts may be formed on the lateral sides and back side of a polymer substrate. Among two signal transfer parts, the first signal transfer part may be formed on one side of the polymer substrate, and the second signal transfer part may be formed on the other side of the polymer substrate. Further, among two reaction electrodes, the first reaction electrode may be formed on the front side of the polymer substrate, and the second reaction electrode may be formed on the back side of the polymer substrate [called "facing-type (sandwich-type) 3D bionsensor"].

As described above, the 3D biosensor of the present invention may be configured such that a reaction portion (that is, reaction electrodes) and a connecting portion (that is, signal transfer parts) exist on different sides of the polymer substrate to cause the functional separation between the reaction portion and the connecting portion. Conversely, the 3D biosensor of the present invention may be configured such that the reaction electrodes and signal transfer parts are formed on the same side of the polymer substrate, which means that the reaction electrodes and signal transfer parts are formed on any one coordinate axis of X axis, Y axis and Z axis of a three-dimensional coordinate system, not that they are formed on the same plane of the polymer substrate.

Further, the reaction electrodes may be formed on any side (for example, a front side, lateral side, back side or the like) of the polymer substrate, may be formed on any shaped side (for example, a plane, curved surface, bent surface or the like) of the polymer substrate, and may be formed in various forms. That is, when the reaction electrodes have a predetermined size for outputting signals having predetermined intensity, the performance (accuracy, reproduction or the like) of the 3D biosensor can be assured. Therefore, as shown in drawings, the reaction electrodes may also be formed on a curved surface of a cylindrical polymer substrate.

Further, the signal transfer parts may be formed on any side (for example, a front side, lateral side, back side or the like) of the polymer substrate, may be formed on any shaped side (for example, a plane, curved surface, bent surface or the like) of the polymer substrate, and may be formed in various forms. Therefore, these signal transfer parts can be connected with a measuring apparatus in various manners, and can provide a connecting convenience to users.

Moreover, in the 3D biosensor of the present invention, the reaction electrodes and signal transfer parts may be formed on the surface of the polymer substrate using 3D MID technology such that they are electrically connected with each other as electrode pattern and wiring pattern. In this case, the reagent-coated portion of the polymer substrate may be reaction electrodes, and the other portion thereof may be signal transfer parts.

A reagent causes an oxidation-reduction reaction together with a target material, and is applied on the reaction electrodes. In the present invention, a reagent may be used according to the kind of a target material. That is, the 3D biosensor of the present invention can measure various biological materials, such as blood sugar, ketone and the like, and, in this case, a reagent may be used in accordance with the kind of the target material to be measured.

A spacer is stacked on the reaction electrodes coated with the reagent, and forms a space for a capillary phenomenon of a sample being rapidly introduced into the reaction chamber of the 3D biosensor. Of course, in the present invention, when a cover forms a space for a capillary phenomenon because it has a dome structure, the spacer is not required. Such a spacer may be made of an insulation material such as a film, plastic or the like.

A cover surrounds the reaction chamber to protect the reagent applied on the reaction electrodes, and may be provided with an air outlet to rapidly introduce a sample into the reaction chamber by a capillary phenomenon. Of course, when a sample inlet is opened in a direction opposite to the air outlet, the cover may not be provided with the air outlet. Such a cover may be made of an insulation material such as a film, plastic or the like.

Meanwhile, the spacer or cover may be integrated with the polymer substrate, that is, may be formed such that it becomes a part of the polymer substrate. That is, a polymer substrate provided with a foldable cover is prepared, a reagent is applied onto reaction electrodes, and then the foldable cover is attached to the reaction chamber by thermal fusion, bonding or the like, thereby manufacturing a 3D biosensor.

The sample containing a target material is introduced into the reaction chamber of the 3D biosensor through the sample inlet.

A connection fixing unit is connected to an insertion opening of a measuring apparatus in order to prevent the signal transfer parts connected with the socket of the measuring apparatus from moving. Such a connection fixing unit is exemplified in the drawing in which the signal transfer parts are formed on the lateral side of the polymer substrate.

Meanwhile, the 3D biosensor of the present invention may be further provided with auxiliary electrodes on the surface of the polymer substrate. Such auxiliary electrodes can be used to confirm whether a sample was introduced or whether a sample was sufficiently introduced or to provide sensor discrimination information (kind of target material, measuring conditions, producing information, user information or the like) from the 3D biosensor to the measuring apparatus. Such auxiliary electrodes may be disposed in the vicinity of the connection fixing unit, signal transfer parts, reaction electrodes or the like.

Meanwhile, the 3D biosensor of the present invention may further include a sensor discrimination information providing unit. Such a sensor discrimination information providing unit can be used to provide sensor discrimination information (kind of target material, measuring conditions, producing information, user information or the like) from the 3D biosensor to the measuring apparatus. Such a sensor discrimination information providing unit may be realized by 3D MID technology or in the form of color tag, bar code, pattern arrangement having resistance value or pattern arrangement having specific shape. In the drawings of the present invention, the sensor discrimination information providing unit is disposed in the vicinity of the connection fixing unit.

The operating procedure (for example, blood sugar measurement) of the 3D biosensor of the present invention using electrochemical amperometry is explained as follows. When a voltage is applied to a measuring apparatus, this voltage is transmitted to the signal transfer parts of the 3D bionsensor by a socket of the measuring apparatus, and then applied to reaction electrodes through the signal transfer parts. When the voltage is applied to the reaction electrodes, analog signals (electric current) are generated by the electrochemical reaction between a reagent and a target material (for example, blood sugar in blood). This electric current is transferred from the reaction electrodes to the measuring apparatus through the signal transfer parts. The measuring apparatus deduces the result values (for example, blood sugar values as concentration values of the target material) corresponding to the electric current using arithmetic processing.

FIGS. 3 to 22 are perspective views showing three-dimensional biosensors and manufacturing methods thereof according to various embodiments of the present invention.

In the 3D biosensor of FIG. 3, reaction electrodes are formed on the front side of a polymer substrate, and signal transfer parts are formed over the lateral and back sides of the polymer substrate. This 3D biosensor may be connected to a measuring apparatus in a downward direction. The polymer substrate has a rectangular hexahedral structure. As such, in the present invention, the reaction electrodes and signal transfer parts, which are formed on different sides of the polymer substrate, can be electrically connected with each other without using a viahole, a clamp or the like.

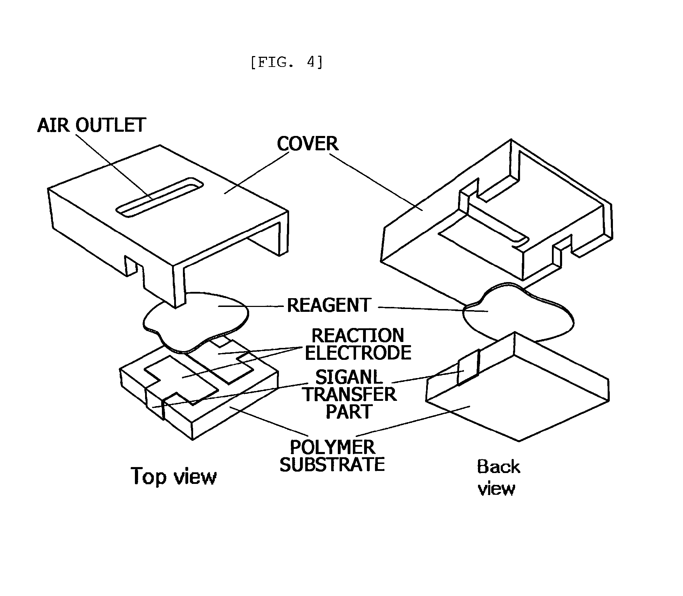

In the 3D biosensor of FIG. 4, reaction electrodes are formed on the front side of a polymer substrate, and signal transfer parts are formed on both lateral sides of the polymer substrate (or all signal transfer parts may be formed on one lateral side of the polymer substrate). In this 3D biosensor, the lateral sides of the polymer substrate may be connected to a measuring apparatus. For this purpose, a part of a dome-shaped cover facing the signal transfer parts is opened. The polymer substrate has a rectangular hexahedral structure.

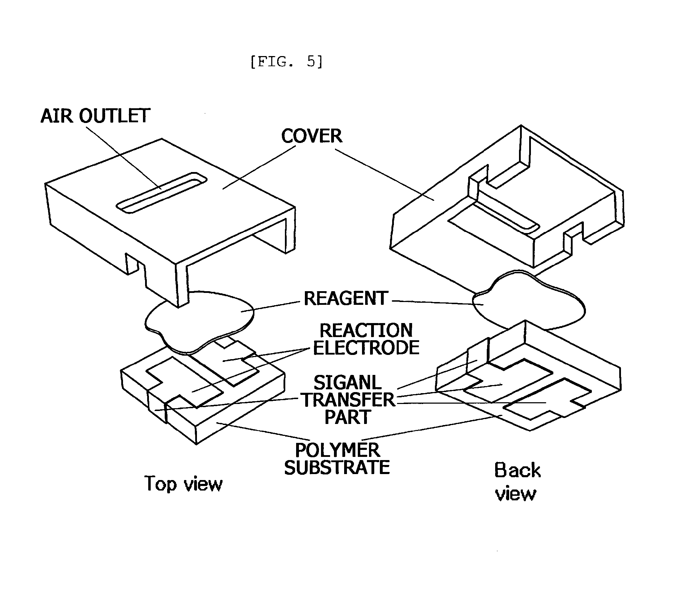

In the 3D biosensor of FIG. 5, reaction electrodes are formed on the front side of a polymer substrate, and signal transfer parts are formed over the lateral and back sides of the polymer substrate. In this 3D biosensor, a part of a dome-shaped cover facing the signal transfer parts formed on the lateral sides of the polymer substrate is opened. In this 3D biosensor, the lateral sides of the polymer substrate may be connected to a measuring apparatus or the back side thereof may be connected to the measuring apparatus. The polymer substrate has a rectangular hexahedral structure.

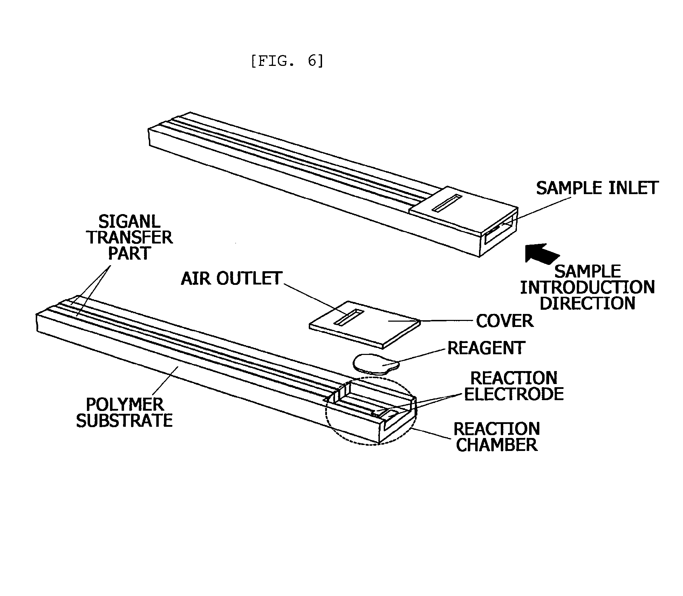

The 3D biosensor of FIG. 6 has a structure in which a sample is introduced in a direction of the front side thereof, and is provided at the front end thereof with a sample inlet. This 3D biosensor is manufactured using a polymer substrate having a rectangular well portion, which is formed by cutting the one end of the polymer substrate in a predetermined shape (for example, a quadrangle). In this 3D biosensor, reaction electrodes are formed on the rectangular well portion of the polymer substrate, and signal transfer parts are formed from the lateral side of the rectangular well portion of the polymer substrate to the other end of the polymer substrate. In this 3D biosensor, since this polymer substrate having a rectangular well portion is used, a space for a capillary phenomenon (that is, a reaction chamber) may not be additionally formed. That is, as shown in FIG. 6, a spacer is unnecessary, and a cover equipped with an air outlet may be provided such that it covers the reaction chamber. This 3D biosensor can be connected to a measuring apparatus using a generally-known strip-type biosensor connecting method.

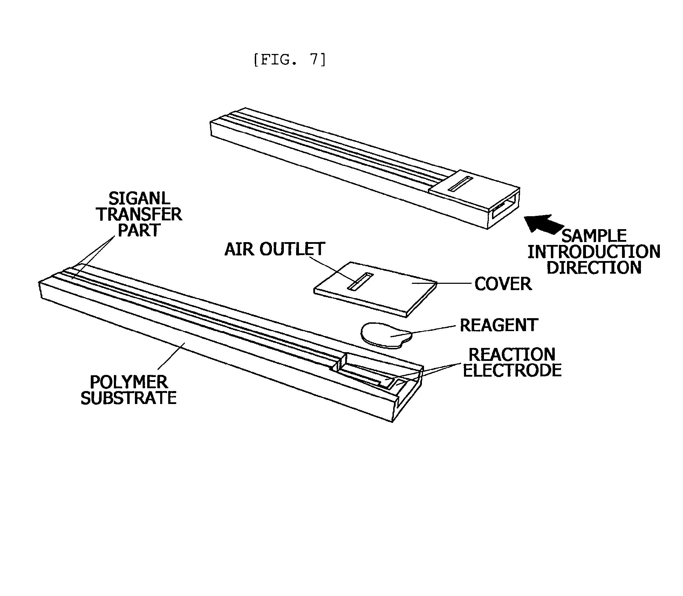

The structure of the 3D biosensor of FIG. 7 is similar to that of the 3D biosensor of FIG. 6. The 3D biosensor of FIG. 7 is manufactured using a polymer substrate having a trapezoidal well portion, which is formed by cutting the one end of the polymer substrate in a predetermined shape (for example, a trapezoid). In this 3D biosensor, reaction electrodes are formed on the trapezoidal well portion of the polymer substrate, and signal transfer parts are formed from the lateral side of the trapezoidal well portion of the polymer substrate to the other end of the polymer substrate. As such, in this 3D biosensor, since a reaction chamber has a trapezoidal well structure, the space of the reaction chamber is gradually narrowed in the direction of a sample being introduced into the reaction chamber, and thus the sample can be more rapidly introduced into the reaction chamber.

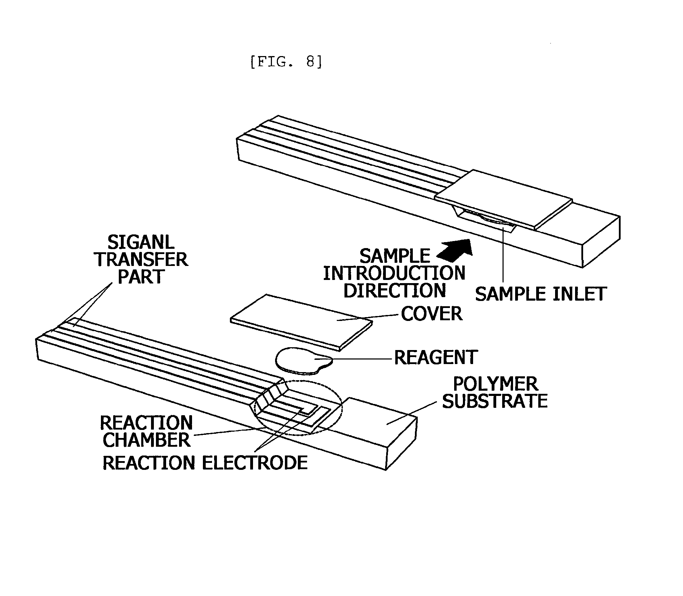

The 3D biosensor of FIG. 8 has a structure in which a sample is introduced in the direction of the lateral side thereof, and is provided at the center thereof with a sample inlet. This 3D biosensor is manufactured using a polymer substrate having a predetermined-shaped well portion, which is formed by cutting the center of the polymer substrate in a predetermined shape. In this 3D biosensor, reaction electrodes are formed on the well portion of the polymer substrate, and signal transfer parts are formed from the lateral side of the well portion of the polymer substrate to the other end of the polymer substrate. In this 3D biosensor, a spacer is unnecessary, and a cover may not be provided with an air outlet. That is, a sample can be introduced into a reaction chamber formed on one lateral side of the 3D biosensor, and the other lateral side of the 3D biosensor functions as an air outlet because it is opened. Meanwhile, the sample can also be introduced in a direction opposite to the lateral side of the 3D biosensor shown in FIG. 8.

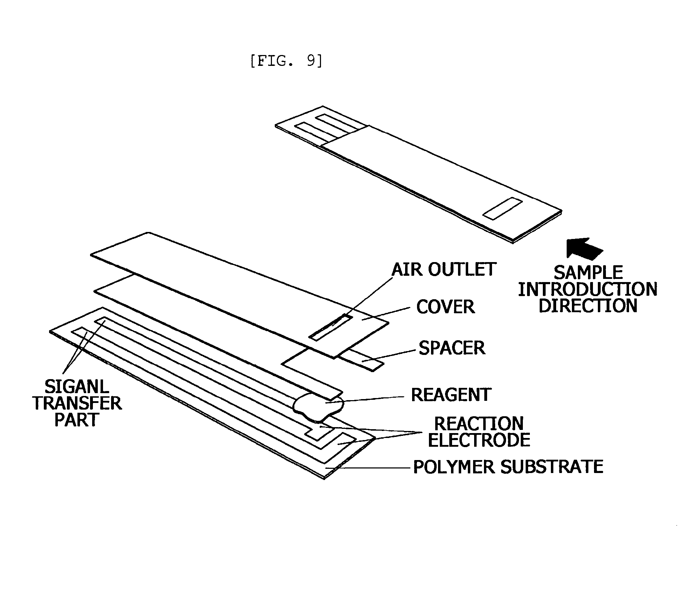

The structure of the 3D biosensor of FIG. 9 is generally called a strip structure. In this 3D biosensor, reaction electrodes and signal transfer parts are formed on one side (front side) of a polymer substrate. The polymer substrate shown in FIG. 9 is thin, but may be thick. Further, the 3D biosensor shown in FIG. 9 is configured such that a spacer and a cover are stacked, but may be configured such that it is provided with a dome-shaped cover without spacer.

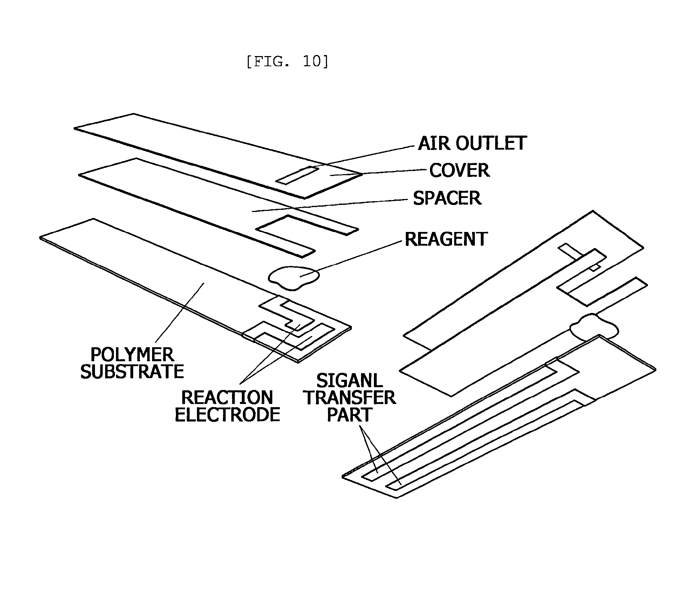

The structure of the 3D biosensor of FIG. 10 is generally called a strip structure, but is different from the structure of the 3D biosensor of FIG. 9 in that reaction electrodes are formed at one end of the front side of the polymer substrate, and signal transfer parts are formed from the lateral side of the polymer substrate to the other end of the back side of the polymer substrate. The front side of the 3D biosensor of FIG. 9 is connected with a measuring apparatus, whereas the back side of the 3D biosensor of FIG. 10 is connected with the measuring apparatus.

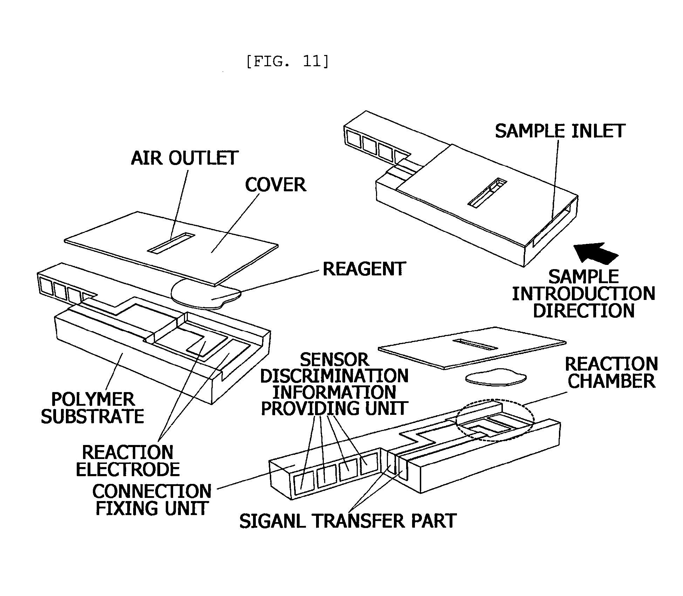

The 3D biosensor of FIG. 11 is configured such that a connection fixing unit is integrated with a polymer substrate. This 3D biosensor is manufactured using a polymer substrate provided at one end thereof with a well portion. That is, reaction electrodes are formed on the well portion of the polymer substrate, and signal transfer parts are formed from the lateral side of the well portion of the polymer substrate to the other end of the polymer substrate. The signal transfer parts formed on the other end of the polymer substrate are connected to a measuring apparatus. In order to prevent the signal transfer parts connected with the socket of the measuring apparatus from moving, the connection fixing unit is connected to an insertion opening of the measuring apparatus.

Meanwhile, as shown in FIG. 11, the 3D biosensor of the present invention, as described above, may further include sensor discrimination information providing units on the lateral side of the connecting fixing unit.

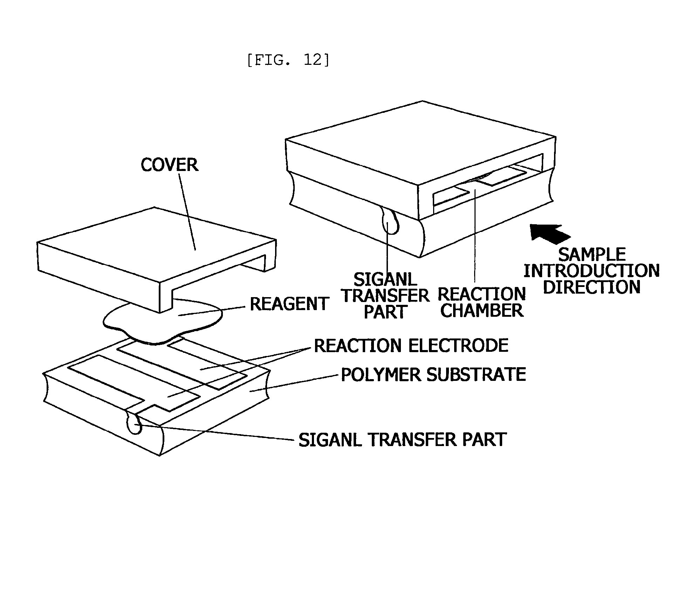

FIG. 12 shows a 3D biosensor configured such that signal transfer parts are formed on the curved surface of a polymer substrate. Here, all of two signal transfer parts may be formed on one curved surface of the polymer substrate, or the first signal transfer part may be formed on one curved surface of the polymer substrate and the second signal transfer part may be formed on the other curved surface thereof (a curved surface adjacent to the one curved surface, a curved surface opposite to the one curved surface or the like).

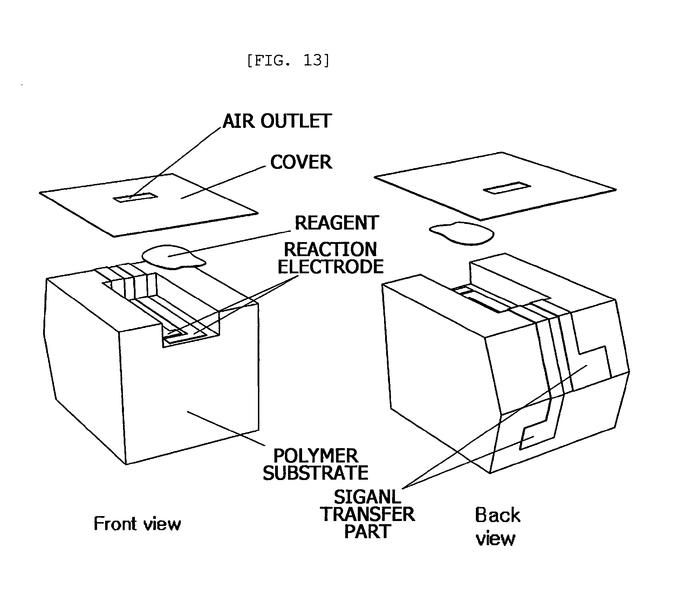

FIG. 13 shows a 3D biosensor configured such that signal transfer parts are formed over two sides of a pentahedral polymer substrate. Here, the first signal transfer part may be formed over two sides of the polymer substrate, and the second signal transfer part may be formed on one side of the polymer substrate.

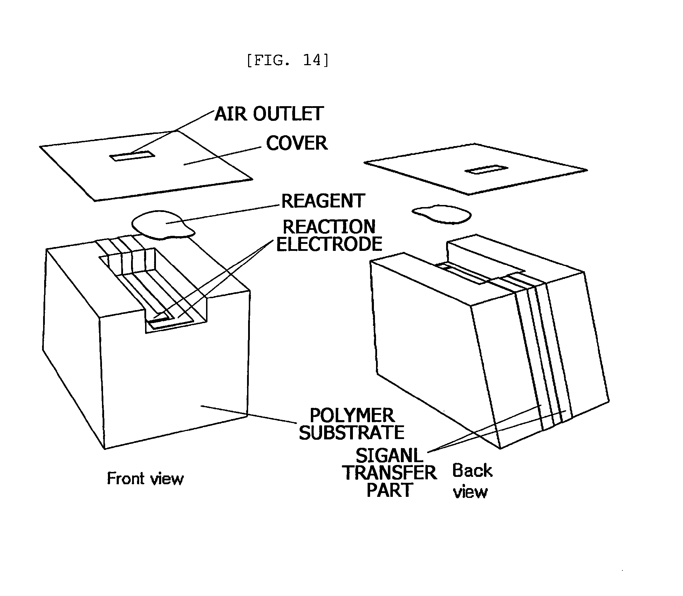

FIG. 14 shows a 3D biosensor configured such that signal transfer parts are formed on the oblique side of a rectangular trapezoidal polyhedral polymer substrate.

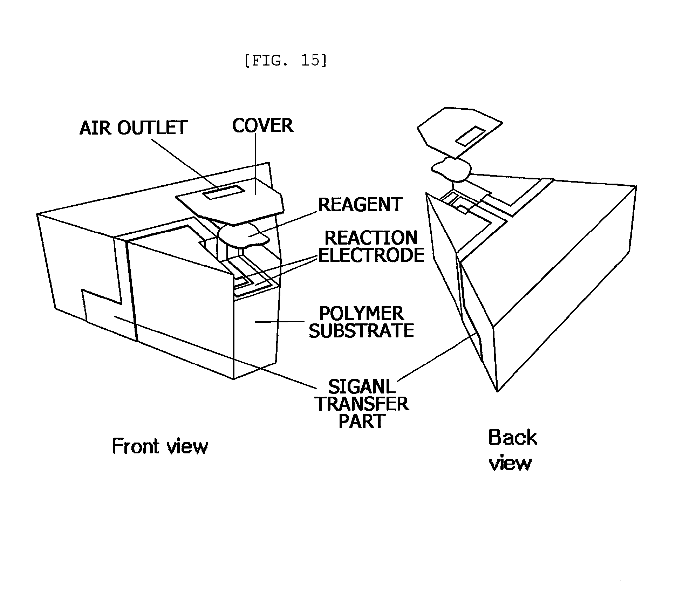

FIG. 15 shows a 3D biosensor configured such that signal transfer parts are formed on both oblique sides of a trapezoidal polyhedral polymer substrate. Here, reaction electrodes are formed on the well portion formed at the top of the trapezoidal polyhedral polymer substrate.

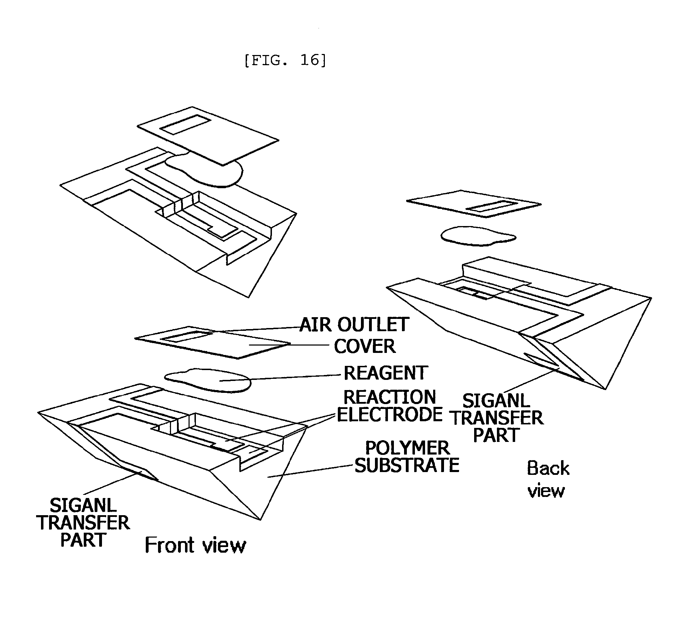

FIG. 16 shows a 3D biosensor configured such that signal transfer parts are formed on both oblique sides of a triangular polyhedral polymer substrate.

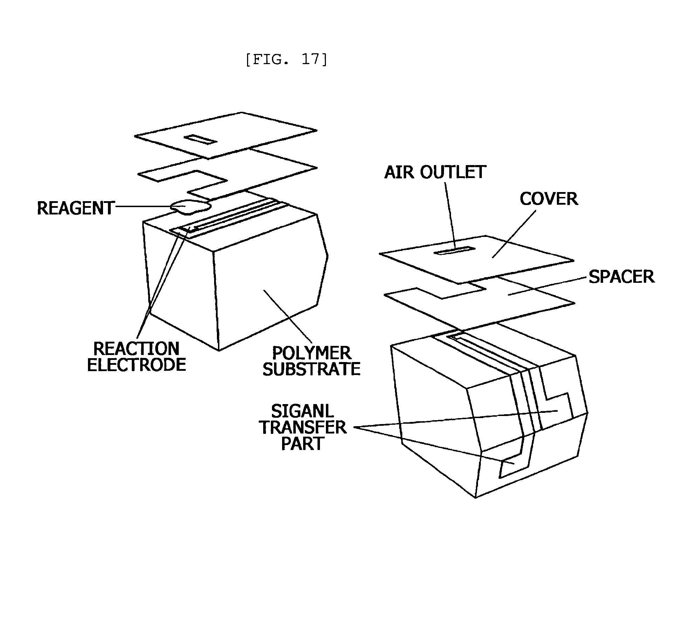

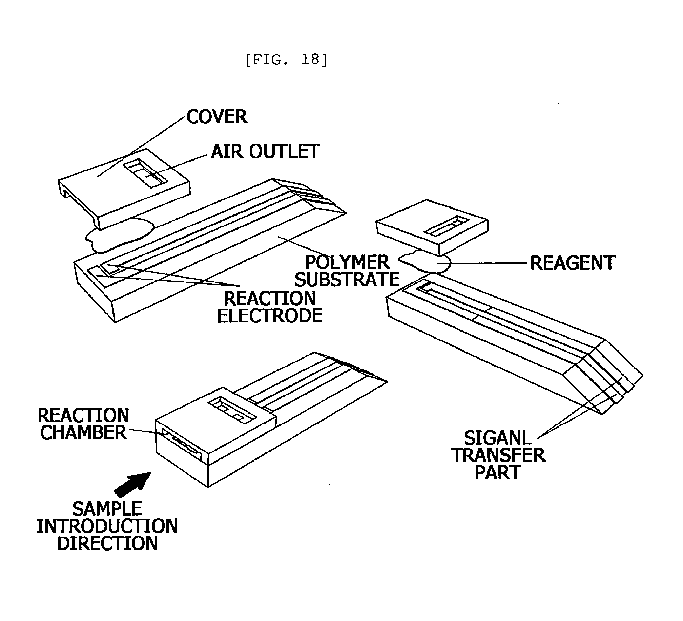

Each of the 3D biosensors shown in FIGS. 13 to 16 is configured such that reaction electrodes are formed on the well portion of a polyhedral polymer substrate, whereas each of the 3D biosensors shown in FIGS. 17 and 18 is configured such that reaction electrodes are formed on the plane of a polyhedral polymer substrate. Here, the 3D biosensor of FIG. 17 is configured such that a spacer and a cover are stacked on the reaction electrodes, and the 3D biosensor of FIG. 18 is configured such that a dome-shaped cover is stacked on the reaction electrodes.

As described above, the signal transfer parts of the 3D biosensor of the present invention may be formed on any side (for example, a front side, lateral side, back side or the like) of the polymer substrate, may be formed on any shaped surface (for example, a plane, curved surface, bent surface or the like) of the polymer substrate, and may be formed in various forms.

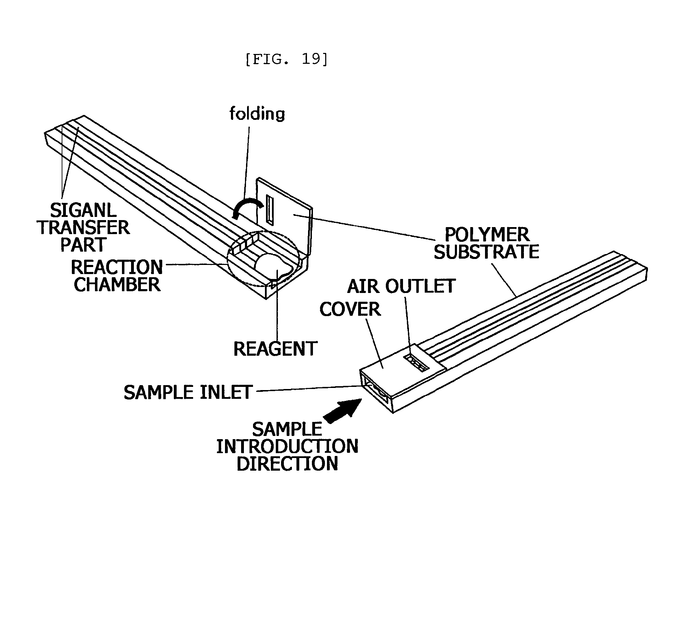

FIGS. 19, 20, 21a and 21b show 3D biosensors having a folding structure.

That is, each of the 3D biosensors of FIGS. 19, 20, 21a and 21b may be manufactured using a polymer substrate integrated with a cover, a part of the polymer substrate functioning as a cover, without providing an additional cover.

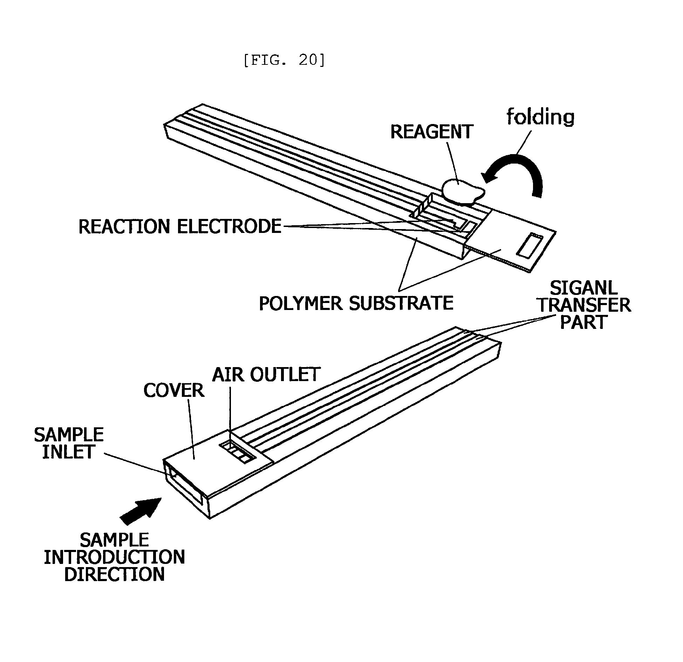

As shown in FIGS. 19 and 20, each of the 3D biosensors of FIGS. 19 and 20 may be manufactured by forming reaction electrodes and signal transfer parts on the well portion of a polymer substrate provided with a cover portion, applying a reagent onto the reaction electrodes, folding the cover portion onto a reaction chamber and then attaching the cover portion to the well portion by thermal fusion, bonding or the like.

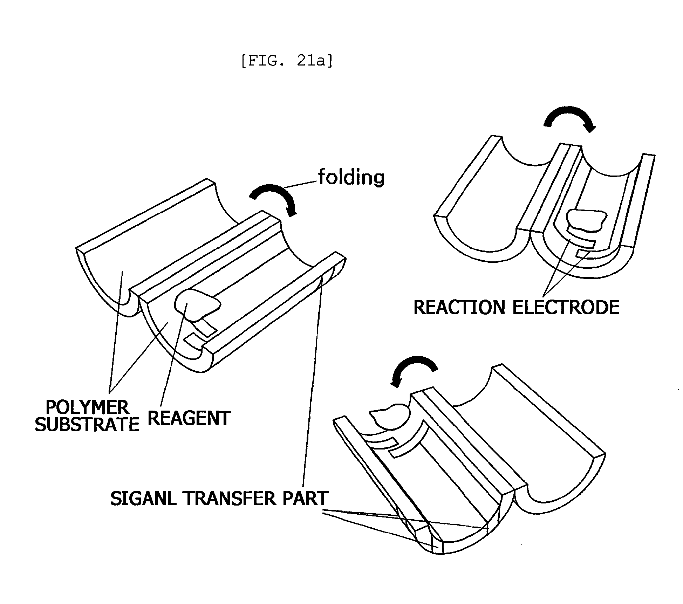

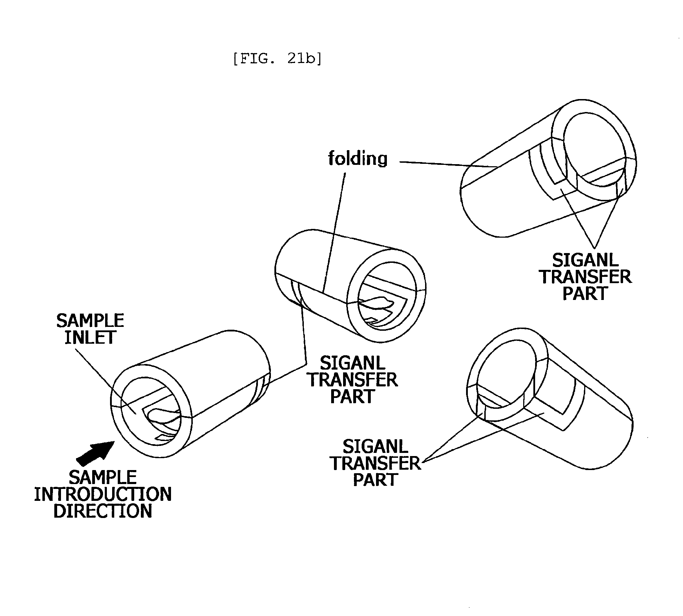

FIGS. 21a and 21b show 3D biosensors manufactured using a cylindrical polymer substrate having a folding structure.

As shown in FIGS. 21a and 21b, any one of two semicylindrical polymer substrates functions as a cover. Reaction electrodes are formed on the inner surface of the other semicylindrical polymer substrate, and signal transfer parts are formed over the circumference of the bottom thereof and the outer surface thereof. Thereafter, a reagent is applied onto the reaction electrodes, and then the two semicylindrical polymer substrates are coupled with each other by folding them, thereby manufacturing the 3D biosensor.

Such a cylindrical 3D biosensor does not need a constituent for forming a reaction chamber, such as a cover or the like, because its inner space functions as a chamber, and can be connected to a measuring apparatus in all directions by users because signal transfer parts are formed on the outer surface of a cylindrical polymer substrate. Therefore, this cylindrical 3D biosensor can provide user convenience (similar to the connection of ear phone jack).

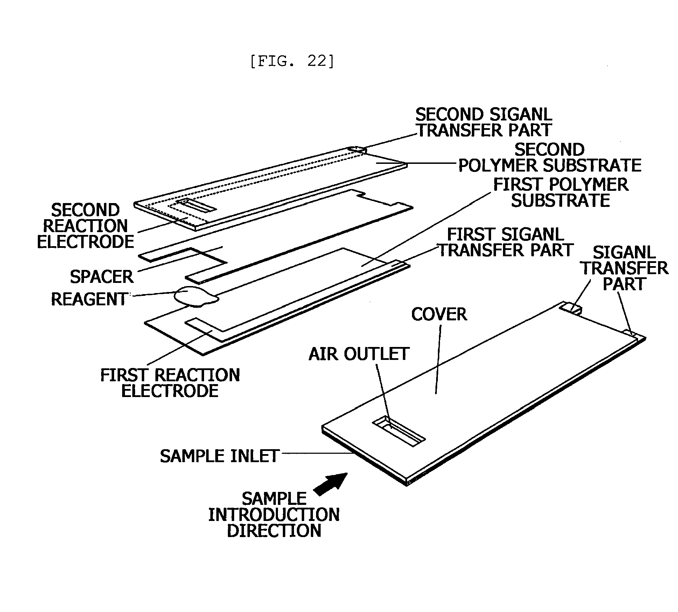

The 3D biosensor of FIG. 22 is a facing-type (sandwich-type) 3D biosensor, and is configured such that reaction electrodes and signal transfer parts are respectively formed on the surfaces of different polymer substrates. That is, a first reaction electrode and a first signal transfer part are formed on the front side of a first polymer substrate, and a second reaction electrode and a second signal transfer part are formed on the back side of a second polymer substrate. When the first reaction electrode and the second reaction electrode face each other, a reaction area can be minimized, and signal intensity can be increased. In this embodiment, two polymer substrates are used to manufacture the 3D biosensor

As described above, the reaction electrodes of the 3D biosensor of the present invention may be formed on any side (for example, a front side, lateral side, back side or the like) of the polymer substrate, may be formed on any shaped surface (for example, a plane, curved surface, bent surface or the like) of the polymer substrate, and may be formed in various forms.

Further, in the present invention, all polymer substrates having various complicated polyhedral shapes, such as a thin film-type plane, a plane having predetermined thickness, a polygon (a square, a rectangle, a trapezoid, a lozenge or a triangle), an ellipse, a semicylinder, a cylinder, a cube having a curve, a bend or a notch, and the like may be used to manufacture a 3D biosensor.

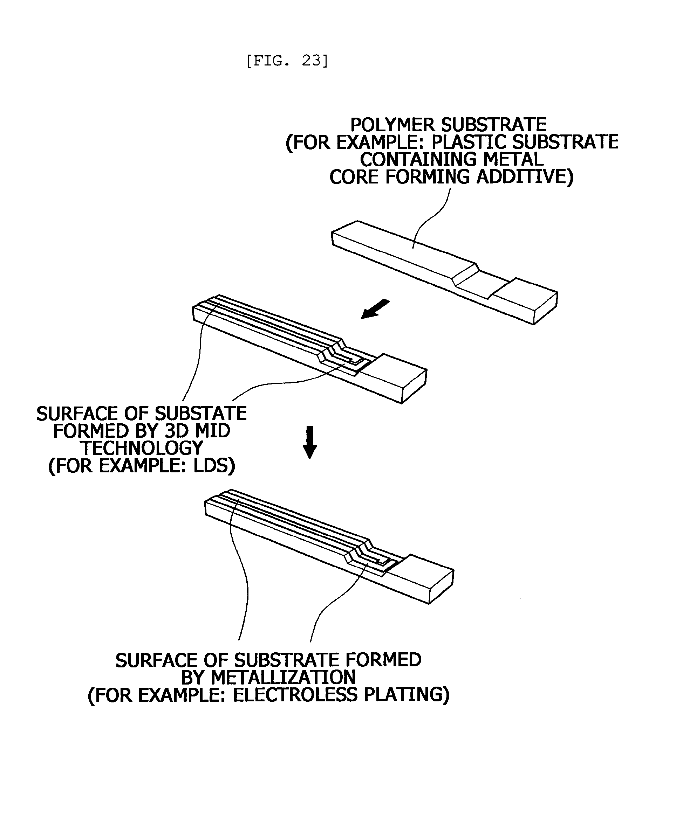

FIG. 23 is a schematic view showing a process of forming reaction electrodes and transfer signal parts on the surface of a plastic substrate using LDS (laser direct structuring).

First, a polymer substrate having a well structure, for example, a plastic substrate containing a metal core forming additive, the polymer substrate being used as a body (a frame or support material) of a 3D biosensor, is provided. Preferably, such a polymer substrate may be made of plastic (for example, polycarbon) including a metal core forming additive that can be activated by the irradiation of laser, that is, a laser-sensitive additive (or a laser-sensitive metal complex). Examples of the raw materials of the polymer substrate may include amorphous PSU, PES, PC and ABS; and semicrystalline LCP (Liquid crystal polymer), PPA, HTN, PA6/6T, PET, PBT, and PP. For example, a body of a 3D biosensor may be formed of thermoplastic plastic or thermosetting plastic containing at least one thermostable spinel-type organic metal chelate complex. As currently-used raw materials of the polymer substrate, there are 'Vestodur CL2230' and 'Vestodur CL3230', manufactured by Degussa Corporation, 'Ultramid T4380LS', manufactured by BASF Corporation, 'Vectra E820i LDS', manufactured by Ticona Corporation, 'Pocan DP7102', 'Pocan TP710-003' and 'Pocan TP710-004', manufactured by Lanxess Corporation, and the like.

Thereafter, a reaction electrode pattern is formed on the surface of the well portion of one end of the plastic substrate, and a signal transfer part pattern is formed from the lateral side of the well portion to the other end of the plastic substrate. In this case, the surface of the plastic substrate is irradiated with laser using a laser machine, so the surface thereof irradiated with laser is activated, that is, the metal core forming additive (heavy metal cores) included in the plastic substrate is discharged onto the surface of the plastic substrate, thereby allowing the reaction electrode pattern and the signal transfer part pattern to have a rough surface having metal coating adhesivity. Here, the fact that the metal core forming additive is discharged onto the surface of the plastic substrate means that the surface of the plastic substrate is broken, and thus the metal core forming additive included in the plastic substrate is exposed to the outside. Here, the wavelength of laser may be 248 nm, 308 nm, 355 nm, 532 nm, 1,064 nm, 10,600 nm or the like. Meanwhile, the pattern to be formed on the surface of the plastic substrate (a desired pattern) can be modified (designed) by reprogramming using a computer connected with a laser machine, and thus 3D biosensors having various steric structures can be freely manufactured using one biosensor manufacturing machine.

Thereafter, the plastic substrate provided with the reaction electrode pattern and the signal transfer part pattern is metalized by electroless plating, thus forming a reaction electrode and a signal transfer part at their respective pattern sites. That is, the metal core forming additive discharged on the surface of the plastic substrate is coated (deposited) with a metal, thus forming a reaction electrode and a signal transfer part at their respective pattern sites. For example, the reaction electrode and the signal transfer part can be metalliszed by dipping the plastic substrate into a reductant-containing solution.

Hereto, a process of forming reaction electrodes and signal transfer parts on the surface of a polymer substrate has been described. The following process may accord to a generally known biosensor manufacturing process or the above-mentioned process of manufacturing a biosensor described with reference to FIGS. 3 to 23. That is, when a reagent is applied onto reaction electrodes formed on a plastic substrate and then a spacer or/and a cover is stacked, the manufacture of a 3D biosensor is completed.

As described above, the process of manufacturing a biosensor may be performed by selectively using a 3D MID technology, such as LDS (Laser Direct Structuring) process, 2K (2-shot injection molding), flex foil film-insert overmolding, metal spraying technique, primer technology (metal printing), hot stamping or the like, in consideration of the desired body structure of a 3D biosensor, the raw material thereof, the desired structures of a reaction electrode and a signal transfer part, the raw material thereof and the like.

Previously, a process of forming a reaction electrode and a signal transfer part on the surface of a plastic substrate constituting the body of a 3D biosensor using LDS, which is one of various 3D MID technologies, was exemplified with reference to FIG. 23. Next, processes of sterically forming a reaction electrode and a signal transfer part on the surface of a polymer substrate using other 3D MID technologies will be described. To provide additional explanation, a 3D MID technology is a technology of forming a conductive metal pattern on a plastic substrate, and has lately attracted considerable attention with regard to wiring removal, complexity reduction and the like.

A process of forming a reaction electrode and a signal transfer part on the surface of a plastic substrate using 2K (2-shot injection molding) is described as follows.

In the present invention, in 2-shot injection molding, in the first shot, conductive patterns (reaction electrode pattern and signal transfer pattern) are formed, and, in the second shot, an insulation layer is formed.

That is, an injection-molded plastic substrate made of a plating-impossible plastic is provided, and then another plating-possible plastic is injection-molded on the selected portion of the injection-molded plastic substrate. For example, the plating-possible plastic may include a metal core forming additive for a reaction electrode pattern and a signal transfer part pattern, that is, a laser-sensitive additive (or a laser-sensitive metal complex). The process of forming a reaction electrode pattern and a signal transfer part pattern on the surface of the plating-possible plastic substrate may be performed using etching or the above-mentioned laser irradiation. Thereafter, the reaction electrode pattern and the signal transfer part pattern are metalized to form a reaction electrode and a signal transfer part on the plastic substrate, a reagent is applied onto the reaction electrode formed on the plastic substrate, and a spacer or/and a cover are stacked on the reagent, thereby manufacturing a 3D biosensor.

A process of forming a reaction electrode and a signal transfer part on the surface of a plastic substrate using flex foil film-insert overmolding (one-step automation) is described as follows.

Flex foil film-insert overmolding is based on insert molding in which different quality or colored plastic substrates or components (metal parts, cables, PCBs, magnets, and the like) are integrated with each other in a mold.

That is, in this process, a thin conductive metal layer (for example, a gold thin film) is used as the raw material of the reaction electrode and signal transfer part. This thin conductive metal layer is attached to a thick nonconductive polymer film, such as a polyamide film (for example: Kapton) or a polyester film (for example: Mylar) or the like to form a reaction electrode and a signal transfer part on the surface of the body of a 3D biosensor. Here, the necessary portion (other than the reaction electrode and signal transfer part) of the body of a 3D biosensor may be removed by a general process of manufacturing a printed circuit board. That is, the 3D biosensor may be a film-type 3D biosensor. Thereafter, a reagent is applied onto the reaction electrode, and a spacer or/and a cover are stacked on the reagent, thereby manufacturing a 3D biosensor.

A process of forming a reaction electrode and a signal transfer part on the surface of a plastic substrate using a metal spraying technique is described as follows.

In this process, a polymer substrate, which is to be used as a body of a 3D biosensor, is provided. Particularly, in the metal spraying technique, a general plating-impossible plastic substrate may be used as the body of a 3D biosensor. That is, the body of a 3D biosensor may be made of a general plastic, not a plastic containing a metal core forming additive, as in LDS.

Thereafter, the surface (on which a reaction electrode pattern and a signal transfer part are to be formed) of a plastic substrate is roughly processed using a laser structuring process (remark: this process may not be an LDS process).

Thereafter, a metal (which is to be used as a raw material of a reaction electrode and a signal transfer pattern) is sprayed on the roughened surface of the plastic substrate to coat a reaction electrode pattern and a signal transfer part pattern with a metal (for example: gold), thus forming a reaction electrode and a signal transfer part on the surface of the body of a 3D biosensor. Thereafter, a reagent is applied onto the reaction electrode, and a spacer or/and a cover are stacked on the reagent, thereby manufacturing a 3D biosensor.

A process of forming a reaction electrode and a signal transfer part on the surface of a plastic substrate using a primer technology (metal printing) is described as follows.

In this process, a reaction electrode pattern and a signal transfer part pattern is formed by screen-printing a plating-possible primer material (for example: polyurethane-based primer ink) on a film substrate (for example, a mixture of PET, PEN, PC, and PEI). Such a primer material may include a catalyst for metal plating.

Then, the primer material (primer ink) is dried, and then the film substrate is put into an injection mold and then molded together with a plating-impossible polymer (for example: a mixture of ABS and PC). Thus, a reaction electrode pattern and a signal transfer part pattern are disposed on the surface of the polymer-made body of a 3D biosensor.

Thereafter, the reaction electrode pattern and the signal transfer part pattern are metalized to form a reaction electrode and a signal transfer part, a reagent is applied onto the reaction electrode formed on the plastic substrate, and then a spacer or/and a cover is stacked, thereby manufacturing a 3D biosensor.

A process of forming a reaction electrode and a signal transfer part on the surface of a plastic substrate using hot stamping is described as follows.

In this process, a stamping foil (metal thin film) is attached to the surface (on which a reaction electrode pattern and a signal transfer part are to be formed) of a plastic substrate, and is then stamped (heat-transferred) at high temperature and high pressure to form a reaction electrode and a signal transfer part on the surface of the body of a 3D biosensor. Then, a reagent is applied onto the reaction electrode formed on the plastic substrate, and then a spacer or/and a cover is stacked, thereby manufacturing a 3D biosensor. Here, it is preferred that the residue of the stamping foil caused by heat transfer be removed.

As described above, although the preferred embodiments of the present invention have been disclosed for illustrative purposes, those skilled in the art will appreciate that various modifications, additions and substitutions are possible, without departing from the scope and spirit of the invention as disclosed in the accompanying claims.

### Industrial Applicability

The 3D biosensor and manufacturing method thereof using 3D MID technology according to the present invention can be used in the related industrial fields.

## Claims

1. A biosensor, comprising:
at least one polymer substrate;
a structure connected with the at least one polymer substrate to form a reaction chamber;
a reaction electrode and a signal transfer part which are formed on at least one surface of the at least one polymer substrate by a 3D MID (molded interconnect device) technology; and
a reagent fixed on a part of a region of the reaction electrode.

2. The biosensor of claim 1, wherein the 3D MID includes at least one selected from among laser direct structuring process, 2-shot injection molding, flex foil film-insert overmolding, metal spraying technique, primer technology (metal printing), and hot stamping.

3. The biosensor of claim 1, wherein the reaction electrode and the signal transfer part are sterically formed.

4. The biosensor of claim 3, wherein the reaction electrode and the signal transfer part are formed such that they are electrically connected with each other.

5. The biosensor of claim 4, wherein the reaction electrode and the signal transfer part are formed on different surfaces of the polymer substrate.

6. The biosensor of claim 4, wherein the reaction electrode and the signal transfer part comprise:
a first reaction electrode, and a first signal transfer part connected to the first reaction electrode; and
a second reaction electrode, and a second signal transfer part connected to the second reaction electrode,
wherein the first reaction electrode and the first signal transfer part and the second reaction electrode and the second signal transfer part are formed on different polymer substrates.

7. The biosensor of claim 1, wherein the polymer substrate is a steric or planar plastic substrate.

8. The biosensor of claim 1, wherein the structure includes at least one of a spacer and a cover having an air outlet.

9. The biosensor of claim 8, wherein the structure is integrally formed with the polymer substrate.

10. A method of manufacturing a biosensor, comprising the steps of:
forming a reaction electrode and a signal transfer part on a surface of at least one polymer substrate;
fixing a reagent on the reaction electrode; and
connecting a structure to the at least one polymer substrate to form a reaction chamber,
wherein the reaction electrode and the signal transfer part are formed on any one surface of the at least one polymer substrate.

11. The method of claim 10, wherein the 3D MID includes at least one selected from among laser direct structuring process, 2-shot injection molding, flex foil film-insert overmolding, metal spraying technique, primer technology (metal printing), and hot stamping.

12. The method of claim 10, wherein the reaction electrode and the signal transfer part are sterically formed.

13. The method of claim 12, wherein the reaction electrode and the signal transfer part are formed such that they are electrically connected with each other.

14. The method of claim 13, wherein the reaction electrode and the signal transfer part are formed on different surfaces of the polymer substrate.

15. The method of claim 13, wherein the reaction electrode and the signal transfer part comprise:
a first reaction electrode, and a first signal transfer part connected to the first reaction electrode; and
a second reaction electrode, and a second signal transfer part connected to the second reaction electrode,
wherein the first reaction electrode and the first signal transfer part and the second reaction electrode and the second signal transfer part are formed on different polymer substrates.

16. The method of claim 10, wherein the polymer substrate is a steric or planar plastic substrate.

17. The method of claim 10, wherein the structure includes at least one of a spacer and a cover having an air outlet.

18. The method of claim 17, wherein the structure is integrally formed with the polymer substrate.

19. A method of manufacturing a biosensor, comprising the steps of:
exposing a metal core forming additive contained in the polymer substrate from a surface of the polymer substrate according to a reaction electrode pattern and a signal transfer part pattern;
applying a metal onto the exposed metal core forming additive to form a reaction electrode and a signal transfer part; and
fixing a reagent on the reaction electrode,
wherein the reaction electrode and the signal transfer part are formed on any one surface of the polymer substrate.

20. The method of claim 19, wherein the metal core forming additive is exposed by a laser radiated to a surface of the polymer substrate.

21. The method of claim 19, wherein the metal is applied onto the exposed metal core forming additive by electroless plating.
